# EUROPEAN PATENT SPECIFICATION

(11) **EP 4 459 982 B1**
(45) Date of publication and mention of the grant of the patent: **10.12.2025**
(21) Application number: 23903715.3
(22) Date of filing: 18.10.2023
(51) Int. Cl.: H04N 7/18, G03B 17/56

(54) **APPARATUS FOR PHOTOGRAPHING TUNNEL WALL SURFACE**
VORRICHTUNG ZUM PHOTOGRAPHIEREN DER OBERFLÄCHE EINER TUNNELWAND
APPAREIL DE PHOTOGRAPHIE DE SURFACE DE PAROI DE TUNNEL

(30) Priority: 12.12.2022 KR 20220172432
(43) Date of publication of application: 06.11.2024
(73) Proprietor: FMK Inc., Gumi-si, Gyeongsangbuk-do 39213 (KR)
(72) Inventor: SUNG, Hyun Suk, Gyeongsan-si Gyeongsangbuk-do 38654 (KR)
(74) Representative: BCKIP Part mbB
(86) International application number: PCT/KR2023/016148
(87) International publication number: WO 2024/128511

(56) References cited:
- CN-A- 111 791 214
- CN-U- 206 959 803
- JP-A- 2001 271 583
- KR-A- 20120 126 680
- KR-A- 20150 015 732
- KR-A- 20200 039 382
- KR-B1- 101 781 488
- KR-B1- 102 513 971

## Description

### Technical Field of the Invention

The present invention relates to an apparatus for photographing a tunnel wall surface. More particularly, the present invention relates to an apparatus for photographing a tunnel wall surface, the apparatus being configured to photograph a tunnel wall surface image for tunnel inspection.

### Background Art

With the development of an image processing technology, a technology of detecting a risk factor such as a crack in a tunnel and performing a tunnel inspection through image analysis is actively being developed. For accurately performing a tunnel inspection, it is important to firstly acquire an image suitable for performing image analysis.

In this regard, a technology of acquiring an image of a tunnel wall surface photographed by a vehicle provided with a plurality of photographing mechanisms has been proposed. In such a conventional technology, since a vehicle provided with a photographing mechanism drives on the ground where other vehicles drive, the vehicle provided with the photographing mechanism disrupts traffic flow, and there is a problem that it is difficult for a user to acquire an image immediately when the user wants the image.

For example, when a vehicle in which a user is seated is provided with a photographing mechanism, there is a problem that image acquisition takes a long time in a situation in which a traffic volume is high. Furthermore, in a situation in which a traffic volume is low, the vehicle may move slower than surrounding vehicles so as to secure image quality, but traffic flow may be hindered. In addition, when an image is acquired after road control is performed, there is a problem that a tunnel cannot be used while the image is acquired, which causes inconvenience to road users, and there is a problem that it is difficult to obtain approval for road control and then perform photographing.

CN 111 791 214 A discloses an inspection system including a guide rail and an inspection robot for inspecting construction tunnels. The inspection robot includes a walking device, a main body, a pan-tilt and a camera.

KR 101 781 488 B1 discloses a rail-activated surveillance system capable of overcoming a blind spot caused by distant or obstacles by using a surveillance camera unit mounted on a horizontally moving module for horizontally moving a long-distance section along a rail section.

### Disclosure of the Invention

### Technical Problem

Accordingly, the present invention has been made keeping in mind the above problems occurring in the related art. It is an object of the present invention to provide an apparatus for photographing a tunnel wall surface, the apparatus being capable of photographing the tunnel wall surface while the apparatus is moving on a rail mounted along a ceiling of a tunnel.

The objective that can be obtained from the present invention is not limited to the above-mentioned objective, and other objectives not mentioned herein will be clearly understood from the following description.

### Technical Solution

In order to achieve the above objective, the present invention provides an apparatus for photographing a tunnel wall surface in accordance with claim 1.

According to the present invention, there is provided an apparatus for photographing a tunnel wall surface, the apparatus including: a rail mounted on a ceiling of a tunnel in a longitudinal direction of the tunnel; a moving block connected to the rail and configured to be moved along the rail according to driving of a motor provided with an encoder; a connection mount connected to a lower portion of the moving block; a camera mount fixed to the connection mount, the camera mount having a front surface facing a first end of the rail, a rear surface facing a second end of the rail, and an outer circumferential surface parallel to the rail; a camera unit including a plurality of lateral cameras which is mounted on the outer circumferential surface of the camera mount with intervals therebetween and which is configured to photograph the tunnel wall surface; and a control unit mounted inside the camera mount and configured to control the driving of the motor.

### Advantageous Effects

According to the present invention, there is an effect that the apparatus for photographing the tunnel wall surface is provided, the apparatus being capable of photographing the tunnel wall surface while the apparatus is moving along the rail mounted along the ceiling of the tunnel.

According to the present invention, since the apparatus is capable of photographing the tunnel wall surface at a desired position regardless of the traffic flow, there is an effect that the apparatus for photographing the tunnel wall surface is provided, the apparatus increasing image acquisition convenience.

Effects of the present invention are not limited to the effects mentioned above, and other effects not mentioned will be clearly understood by those skilled in the art from the description of the claims.

### Description of Drawings

FIG. 1 is a perspective view illustrating a tunnel in which an apparatus for photographing a tunnel wall surface according to an embodiment of the present invention is mounted.
FIG. 2 is a perspective view illustrating the apparatus for photographing the tunnel wall surface according to an embodiment of the present invention.
FIG. 3 is a perspective view illustrating a state in which a cover is removed from the apparatus for photographing the tunnel wall surface according to an embodiment of the present invention in order to describe a connection relationship between a rail and a moving block.
FIG. 4 is a perspective view illustrating a state in which the cover is removed from the apparatus for photographing the tunnel wall surface according to an embodiment of the present invention in order to describe a connection relationship of the moving block in a different direction from FIG. 3.
FIG. 5 is a perspective view illustrating the moving block of the apparatus for photographing the tunnel wall surface according to an embodiment of the present invention.

### Mode for Invention

In order to achieve the objective of the present invention, according to the present invention, there is provided an apparatus for photographing a tunnel wall surface.

The apparatus includes: a rail mounted on a ceiling of a tunnel in a longitudinal direction of the tunnel; a moving block connected to the rail and configured to be moved along the rail according to driving of a motor provided with an encoder; a connection mount connected to a lower portion of the moving block; a camera mount fixed to the connection mount, the camera mount having a front surface facing a first end of the rail, a rear surface facing a second end of the rail, and an outer circumferential surface parallel to the rail; a camera unit including a plurality of lateral cameras which is provided on the outer circumferential surface of the camera mount with intervals therebetween and which is configured to photograph the tunnel wall surface; and a control unit mounted inside the camera mount and configured to control the driving of the motor.

The apparatus for photographing the tunnel wall surface further includes: a power supply line which is mounted on a first surface of the rail along a longitudinal direction of the rail and to which a driving power from outside is supplied; and a power supply terminal mounted on a first side of the moving block such that the power supply terminal is in contact with the power supply line, the power supply terminal being electrically connected to the motor and the camera unit, and the power supply terminal being configured to supply the driving power supplied from outside to the motor and the camera unit.

The power supply terminal is provided with a close contact maintaining part that convexly protrudes toward the power supply line so that the power supply terminal is always in close contact with the power supply line.

The apparatus for photographing the tunnel wall surface further includes a position detection mechanism allowing the control unit to detect a position of the moving block inside the tunnel, wherein the position detection mechanism includes: a plurality of position checking holes formed through the rail along the longitudinal direction of the rail with a predetermined interval; a light-emitting sensor mounted on a first side of the moving block; and a light receiving sensor mounted on a second side of the moving block such that the light receiving sensor faces the light-emitting sensor, the light receiving sensor being configured to receive light which is output from the light-emitting sensor and which is passing through the position checking hole.

The moving block includes: a vertical plate on which the motor is mounted on a first surface of the vertical plate; an upper horizontal plate mounted horizontally on an upper end of the vertical plate; a lower horizontal plate mounted horizontally on a lower end of the vertical plate; a main roller connected to a rotation shaft of the motor and in contact with a first surface of the rail; an upper guide roller including respective upper guide rollers mounted on a front side and a rear side of an upper portion of an inner surface of the vertical plate such that the respective upper guide rollers are capable of being rotated, the upper guide roller being configured to perform a rotation movement by being in close contact with an upper surface of the rail; and a lower guide roller including respective lower guide rollers mounted on a front side and a rear side of an inner surface of the lower horizontal plate such that the respective lower guide rollers are capable of being rotated, the lower guide roller being in contact with a second surface of the rail.

The apparatus for photographing the tunnel wall surface further includes a plurality of fixing brackets having upper portions mounted vertically on the ceiling of the tunnel along the longitudinal direction of the tunnel, wherein the rail is connected to the fixing bracket, and is mounted such that the rail is spaced apart from the ceiling of the tunnel.

### Detailed Description of Embodiments of the Invention

Advantages and features of the present invention, and methods of achieving the same will become apparent with reference to the embodiments described below in detail in conjunction with the accompanying drawings. However, the present invention is not limited to the embodiments disclosed below, but may be implemented in various different forms. The present embodiments are intended to complete the present invention and provided to fully inform those skilled in the art to which the invention pertains of the scope of the invention. The present invention is defined only by the scope of the claims. Meanwhile, the terms used in the specification are used to describe embodiments of the present invention and are not intended to limit the scope of the present invention. In the specification, the terms of a singular form may include plural forms unless otherwise specified.

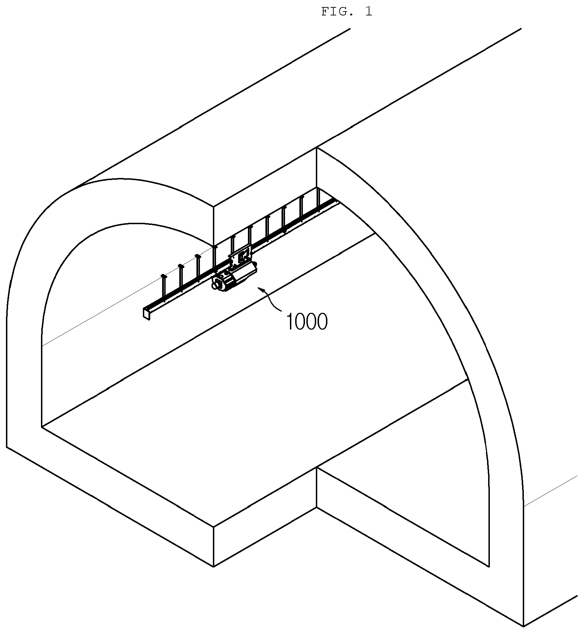

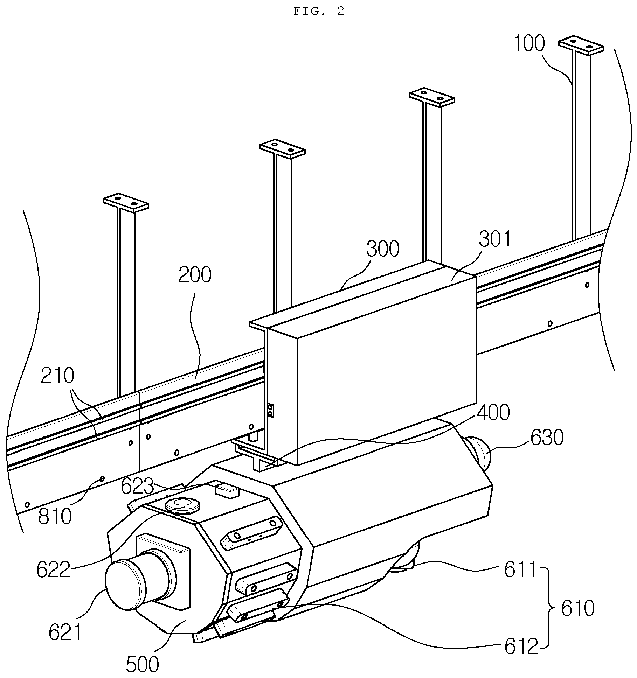

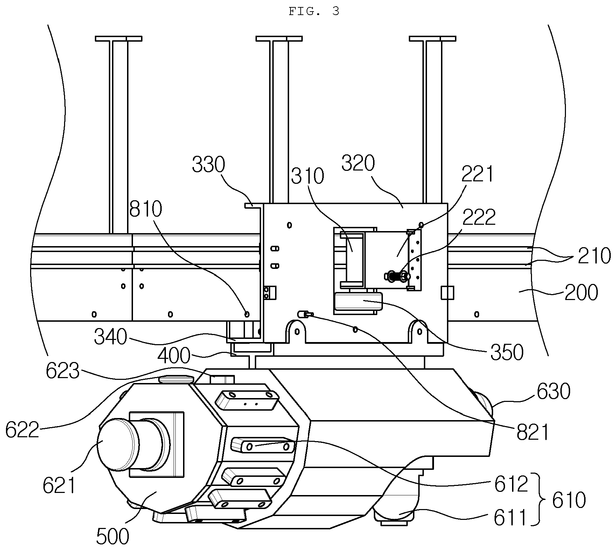

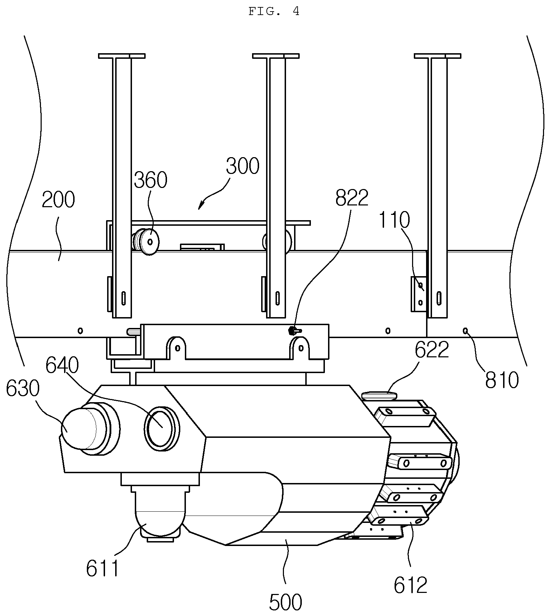

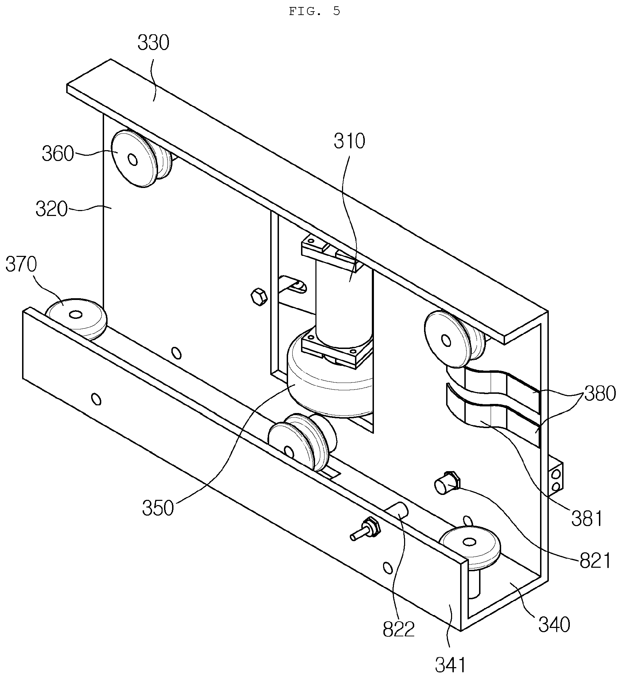

FIG. 1 is a perspective view illustrating a tunnel in which an apparatus for photographing a tunnel wall surface according to an embodiment of the present invention is mounted, FIG. 2 is a perspective view illustrating the apparatus for photographing the tunnel wall surface according to an embodiment of the present invention, FIG. 3 is a perspective view illustrating a state in which a cover is removed from the apparatus for photographing the tunnel wall surface according to an embodiment of the present invention in order to describe a connection relationship between a rail and a moving block, FIG. 4 is a perspective view illustrating a state in which the cover is removed from the apparatus for photographing the tunnel wall surface according to an embodiment of the present invention in order to describe a connection relationship of the moving block in a different direction from FIG. 3, and FIG. 5 is a perspective view illustrating the moving block of the apparatus for photographing the tunnel wall surface according to an embodiment of the present invention.

Referring to the drawings, an apparatus 1000 for photographing a tunnel wall surface may include a fixing bracket 100, a rail 200, a moving block 300, a cover 301, a connection mount 400, a camera mount 500, a camera unit 610, a light detection and ranging (LiDAR) sensor 621, a global positioning system (GPS) sensor 622, a six-axis sensor 623, a warning lamp 630, and a speaker 640.

The plurality of fixing brackets 100 mounted such that upper portions of the fixing brackets 100 are mounted vertically on a celling of a tunnel along a longitudinal direction of the tunnel.

A fixing piece 110 bent in a horizontal direction may be provided on a lower portion of the fixing bracket 100.

The rail 200 is mounted on the ceiling of the tunnel in the longitudinal direction of the tunnel.

The rail 200 may be connected to the fixing bracket 100, and may be mounted such that the rail 200 is spaced apart from the ceiling of the tunnel.

A power supply line 210 to which driving power from outside is supplied may be provided on a first surface of the rail 200 along a longitudinal direction of the rail 200.

A second surface of the rail 200 may be fixed to and mounted on the fixing piece 110 of the fixing bracket 100.

The moving block 300 is configured to be moved along the rail according to driving of a motor 310 provided with an encoder.

The moving block 300 may include the motor 310, a vertical plate 320, an upper horizontal plate 330, a lower horizontal plate 340, a main roller 350, an upper guide roller 360, a lower guide roller 370, and a power supply terminal 380.

The motor 310 may be mounted on a first surface of the vertical plate 320.

A motor mounting part 221 for mounting the motor 310 and a fixing member for fixing the motor 310 to the motor mounting part 221 may be provided on the first surface of the vertical plate 320.

The fixing member includes a tension bolt, a tension spring, and a tension nut, so that the fixing member is capable of elastically supporting the motor 310 toward the rail 200.

Accordingly, the main roller 350 connected to a motor shaft of the motor 310 is rotated while the main roller 350 is in close contact with the rail 200.

The upper horizontal plate 330 may be mounted horizontally on an upper end of the vertical plate 320.

Since the upper horizontal plate 330 is formed such that the upper horizontal plate 330 is vertically bent inwardly from the upper end of the vertical plate 320, the upper horizontal plate 330 may be mounted horizontally on the vertical plate 320.

The lower horizontal plate 340 may be mounted horizontally on a lower end of the vertical plate 320.

Since the lower horizontal plate 340 is formed such that the lower horizontal plate 340 is vertically bent inwardly from the lower end of the vertical plate 320, the lower horizontal plate 340 may be mounted horizontally on the vertical plate 320.

An end portion of the lower horizontal plate 340 may further be provided with a guide part 341 that is vertically bent upward.

The main roller 350 may be connected to a rotation shaft of the motor 310, and a first surface of the main roller 350 may be in contact with the rail 200.

The main roller 350 may be rotated according to the rotation of the motor 310 while the first surface of the main roller 350 is in contact with the rail 200 so that the moving block 300 is capable of being moved.

The upper guide rollers 360 are respectively mounted on a front side and a rear side of an upper portion of an inner surface of the vertical plate 320 such that the upper guide rollers 360 are capable of being rotated, and may perform a rotation movement by being in close contact with the upper surface of the rail 200.

The upper guide roller 360 has a groove which is formed along an outer circumferential surface of the upper guide roller 360 and to which the upper surface of the rail 200 is fitted, so that the upper guide roller 360 is capable of performing the rotation movement by being in close contact with the upper surface of the rail 200.

The lower guide rollers 370 are respectively mounted on a front side and a rear side of an inner surface of the lower vertical plate 340 such that the lower guide rollers 370 are capable of being rotated, and may perform a rotation movement by being in close contact with the second surface of the rail 200.

The power supply terminal 380 may be mounted on the first side of the moving block 300 such that the power supply terminal 380 is in contact with the power supply line 210.

The power supply terminal 380 is electrically connected to the motor 310, the camera unit 610, and a control unit, so that the driving power supplied from outside through the power supply line 210 may be supplied to the motor 310, the camera unit 610, and the control unit.

The power supply terminal 380 is also electrically connected to the warning lamp 630 and the speaker 640, so that the driving power supplied from outside through the power supply line 210 may be supplied to the warning lamp 630 and the speaker 640.

In the power supply terminal 380, a close contact maintaining part 381 that convexly protrudes toward the power supply line 210 may be provided for close contact with the power supply line 210.

The cover 301 is mounted on an outer surface of the moving block 300, so that the outer surface of the moving block 300 may be protected.

The connection mount 400 is connected to a lower portion of the moving block 300.

The camera mount 500 is fixed to the connection mount 400, and has a front surface facing the first end of the rail 200, a rear surface facing the second end of the rail 200, and an outer circumferential surface parallel to the rail 200.

The front surface and the rear surface of the camera mount 500 may be formed in the same polygonal shapes, and may have multiple outer circumferential surfaces.

For example, the front surface and the rear surface of the camera mount 500 may have decagonal shapes so that decagonal column shapes having ten outer circumferential surfaces are provided, but are not limited thereto.

The camera mount 500 may be connected to the connection mount 400, and may be mounted such that the camera mount 500 is spaced apart by a predetermined interval from the moving block 300.

The camera unit 610 may include a driving camera 611 which is mounted on the camera mount 500 and which is configured to photograph inside the tunnel, and includes a plurality of lateral cameras 612 which is mounted on the outer circumferential surface of the camera mount 500 by being spaced apart from each other by a predetermined interval and which is configured to photograph the wall surface of the tunnel.

The driving camera 611 may be configured as a gimbal camera capable of being rotated 360 degrees and 90 degrees respectively on two axes that are a left and right axis and an up and down axis.

The driving camera 611 is mounted on a lower portion of the camera mount 500, and is capable of photographing the inside of the tunnel by being rotated left and right and up and down according to the control of the control unit.

Accordingly, through an image photographed by the driving camera 611, a user is capable of remotely identifying a situation inside the tunnel.

The lateral cameras 612 are respectively mounted on the plurality of outer circumferential surfaces of the camera mount 500, thereby being capable of photographing the wall surfaces of the tunnel at different angles.

The control unit controlling the motor 310 of the moving block 300 may be provided inside the camera mount 500.

Here, the control unit may include a communication part configured to communicate with the outside, to receive a control signal from the user, and to transmit image data generated according to the photographing of the camera unit 610 to the outside. Furthermore, the control unit may include a memory configured to store a plurality of commands corresponding to a plurality of control signals, and may include a processor configured to perform a command corresponding to a control signal received from the communication part.

The processor may be electrically connected to the motor 310, the camera unit 610, the LiDAR sensor 621, the GPS sensor 622, the six-axis sensor 623, the warning lamp 630, and the speaker 640, may perform a pre-stored command corresponding to a control signal, and may control at least one driving of the motor 310, the warning lamp 630, and the speaker 640.

In addition, the processor may transmit at least one of the image data generated by the photographing of the camera unit 610 and three-dimensional data generated by the LiDAR sensor 621 to the communication part so that at least one of the image data and the three-dimensional data is transmitted from the communication unit to the outside.

The LiDAR sensor 621 may be mounted on the camera mount 500, and may generate three-dimensional data.

As the LiDAR sensor 621 is mounted on any one surface among the front surface and the rear surface of the camera mount 500 and the Lidar sensor 621 scans the inside of the tunnel, thereby generating three-dimensional data about the tunnel.

According to the configuration described above, in addition to the tunnel wall image, the three-dimensional data of the tunnel may be acquired.

The GPS sensor 622 may be mounted on the camera mount 500, and may be configured to communicate with a satellite and to receive GPS coordinates from the satellite.

The six-axis sensor 623 may be configured as a six-axis acceleration/gyro sensor, and may be configured to output a plurality of measured values as the six-axis sensor 623 detects a movement of the moving block 300.

Accordingly, the position and the movement of the moving block 300 may be detected by the control unit by using the GPS coordinates received from the GPS sensor 622 and the measured values measured from the six-axis sensor 623.

The warning lamp 630 may be lighted on according to the control of the control unit.

The warning lamp 630 may be lighted on by any one of a plurality of colors corresponding to a plurality of pre-set states (for example, a normal state, a failure state, and an emergency state) according to the control of the control unit, and may indicate a specific state.

For example, when the warning lamp 630 is lighted on in a green color, the green color refers to the normal state. When the warning lamp 630 is lighted on in a yellow color, the yellow color refers to the failure state. When the warning lamp 630 is lighted on in a red color, the red color refers to the emergency state in which a collision accident or a fire has occurred inside the tunnel.

The speaker 640 may output a pre-stored audio according to the control of the control unit.

The speaker 640 may output the audio transmitted from the user in real time according to the control of the control unit.

According to the configuration described above, a situation inside the tunnel may be identified through the camera. Furthermore, when the emergency situation such as a collision accident or a fire occurs, the apparatus of the present invention may be moved inside the tunnel and may provide a notification to a vehicle inside the tunnel.

In addition, the apparatus 1000 for photographing the tunnel wall surface further includes position detection mechanisms 810, 821, and 822 (a position checking hole 810, a light-emitting sensor 821, and a light receiving sensor 822) allowing the control unit to detect the position of the moving block 300.

The position detection mechanisms 810, 821, and 822 includes a plurality of position checking holes 810 which is formed through the rail 200 along the longitudinal direction of the rail 200 and which is spaced apart from each other by a predetermined distance, the light-emitting sensor 821 mounted on the first side of the moving block 300, and the light receiving sensor 822 which is mounted on the second side of the moving block 300 such that the light receiving sensor 822 faces the light-emitting sensor 821 and which is configured to receive light output from the light-emitting sensor 821 and passing through the position checking hole 810.

At this time, the light-emitting sensor 821 may be mounted on an inner side of the vertical plate 320 at a height corresponding to the position checking hole 810, and the light receiving sensor 822 may be mounted on the guide part 341 that is bent vertically toward the upper side of the end portion of the lower horizontal plate 340 such that the light receiving sensor 822 faces the light-emitting sensor 821.

According to the configuration described above, the control unit detects the position of the moving block 300 according to the movement direction of the moving block 300 and the number of times light is received from the light receiving sensor 822.

The apparatus 1000 for photographing the tunnel wall surface according to the present invention may photograph the wall surface of the tunnel without restriction on road traffic.

Accordingly, there is an advantage of increasing convenience in acquiring the tunnel wall image, and there is an advantage of reducing time and cost required for acquiring the tunnel wall image.

In addition, a situation inside the tunnel is capable of being remotely identified, and a notification is provided by light or sound while the apparatus is moved when an emergency situation occurs, so that an effect of performing an active response to the emergency situation may be expected.

It will be understood by those skilled in the art that the present invention can be embodied in other specific forms. Therefore, it should be understood that, in every aspect, the embodiments described above are examples and are not restrictive. The scope of the present invention is characterized by the appended claims rather than the detailed description described above .

### Industrial Applicability

The apparatus for photographing the tunnel wall surface according to the present invention may be used in the technical fields such as the tunnel wall image photographing field, the tunnel inspection field, and so on.

## Claims

1. An apparatus (1000) for photographing a tunnel wall surface, the apparatus (1000) comprising:
a rail (200) mounted on a ceiling of a tunnel in a longitudinal direction of the tunnel;
a moving block (300) connected to the rail (200) and configured to be moved along the rail (200) according to driving of a motor (310) provided with an encoder;
a connection mount (400) connected to a lower portion of the moving block (300);
a camera mount (500) fixed to the connection mount (400), the camera mount (500) having a front surface facing a first end of the rail (200), a rear surface facing a second end of the rail (200), and an outer circumferential surface parallel to the rail (200);
a camera unit (610) comprising a plurality of lateral cameras (612) which is provided on the outer circumferential surface of the camera mount (500) with intervals therebetween and which is configured to photograph the tunnel wall surface;
a control unit mounted inside the camera mount (500) and configured to control the driving of the motor (310); and
a position detection mechanism allowing the control unit to detect a position of the moving block (300) inside the tunnel,
**characterised in that** the position detection mechanism comprises:
a plurality of position checking holes (810) formed through the rail (200) along a longitudinal direction of the rail (200) with a predetermined interval;
a light-emitting sensor (821) mounted on a first side of the moving block (300); and
a light receiving sensor (822) mounted on a second side of the moving block (300) such that the light receiving sensor (822) faces the light-emitting sensor (821), the light receiving sensor (822) being configured to receive light which is output from the light-emitting sensor (821) and which is passing through the position checking hole (810), and
wherein the control unit is configured to detect the position of the moving block (300) according to the movement direction of the moving block (300) and the number of times light is received from the light receiving sensor (822).

2. The apparatus (1000) of claim 1, further comprising:
a power supply line (210) which is mounted on a first surface of the rail (200) along a longitudinal direction of the rail (200) and to which a driving power from outside is supplied; and
a power supply terminal (380) mounted on a first side of the moving block (300) such that the power supply terminal (380) is in contact with the power supply line (210), the power supply terminal (380) being electrically connected to the motor (310) and the camera unit (610), and the power supply terminal (380) being configured to supply the driving power supplied from outside to the motor (310) and the camera unit (610).

3. The apparatus (1000) of claim 2, wherein the power supply terminal (380) is provided with a close contact maintaining part (381) that convexly protrudes toward the power supply line (210) so that the power supply terminal (380) is always in close contact with the power supply line (210).

4. The apparatus (1000) of claim 1, wherein the moving block (300) comprises:
a vertical plate (320) on which the motor (310) is mounted on a first surface of the vertical plate (320);
an upper horizontal plate (330) mounted horizontally on an upper end of the vertical plate (320);
a lower horizontal plate (340) mounted horizontally on a lower end of the vertical plate (320);
a main roller (350) connected to a rotation shaft of the motor (310) and in contact with a first surface of the rail (200);
an upper guide roller (360) comprising respective upper guide rollers mounted on a front side and a rear side of an upper portion of an inner surface of the vertical plate (320) such that the respective upper guide rollers are capable of being rotated, the upper guide roller (360) being configured to perform a rotation movement by being in close contact with an upper surface of the rail (200); and
a lower guide roller (370) comprising respective lower guide rollers mounted on a front side and a rear side of an inner surface of the lower horizontal plate (340) such that the respective lower guide rollers are capable of being rotated, the lower guide roller (370) being in contact with a second surface of the rail (200).

5. The apparatus (1000) of claim 4,
wherein an end portion of the lower horizontal plate (340) is provided with a guide part (341) that is vertically bent upward, and
wherein the light-emitting sensor (821) is mounted on an inner side of the vertical plate (320) at a height corresponding to the position checking hole (810), and the light receiving sensor (822) is mounted on the guide part (341) that is bent vertically toward the upper side of the end portion of the lower horizontal plate (340) such that the light receiving sensor (822) faces the light-emitting sensor (821).

6. The apparatus (1000) of claim 1, further comprising:
a plurality of fixing brackets (100) having upper portions mounted vertically on the ceiling of the tunnel along the longitudinal direction of the tunnel,
wherein the rail (200) is connected to the fixing bracket (100), and is mounted such that the rail (200) is spaced apart from the ceiling of the tunnel.

## Patentansprüche

1. Vorrichtung (1000) zum Fotografieren der Oberfläche einer Tunnelwand, wobei die Vorrichtung (1000) umfasst:
eine Schiene (200), die an einer Decke eines Tunnels in Längsrichtung des Tunnels montiert ist;
einen beweglichen Block (300), der mit der Schiene (200) verbunden ist und so konfiguriert ist, dass er entlang der Schiene (200) entsprechend einem Antrieb eines mit einem Encoder versehenen Motors (310) bewegt werden kann;
eine Verbindungshalterung (400), die mit einem unteren Abschnitt des beweglichen Blocks (300) verbunden ist;
eine Kamerahalterung (500), die an der Verbindungshalterung (400) befestigt ist, wobei die Kamerahalterung (500) eine vordere Oberfläche, die einem ersten Ende der Schiene (200) zugewandt ist, eine hintere Oberfläche, die einem zweiten Ende der Schiene (200) zugewandt ist, und eine äußere Umfangsoberfläche parallel zu der Schiene (200) aufweist;
eine Kameraeinheit (610), die eine Mehrzahl von seitlichen Kameras (612) umfasst, die in Abständen voneinander an der äußeren Umfangsoberfläche der Kamerahalterung (500) vorgesehen sind und die so konfiguriert sind, dass sie die Oberfläche der Tunnelwand fotografieren;
eine Steuereinheit, die im Inneren der Kamerahalterung (500) montiert ist und so konfiguriert ist, dass sie den Antrieb des Motors (310) steuert; und
einen Positionserfassungsmechanismus, der es der Steuereinheit ermöglicht, eine Position des beweglichen Blocks (300) im Inneren des Tunnels zu erfassen,
**dadurch gekennzeichnet, dass**
der Positionserfassungsmechanismus umfasst:
eine Mehrzahl von Positionsprüfungslöchern (810), die entlang einer Längsrichtung der Schiene (200) mit einem vorgegebenen Abstand durch die Schiene (200) gebildet sind;
einen lichtemittierenden Sensor (821), der an einer ersten Seite des beweglichen Blocks (300) montiert ist; und
einen lichtempfangenden Sensor (822), der an einer zweiten Seite des beweglichen Blocks (300) so montiert ist, dass der lichtempfangende Sensor (822) dem lichtemittierenden Sensor (821) zugewandt ist, wobei der lichtempfangende Sensor (822) so konfiguriert ist, dass er Licht empfängt, das von dem lichtemittierenden Sensor (821) ausgegeben wird und das durch das Positionsprüfungsloch (810) hindurchtritt, und
wobei die Steuereinheit so konfiguriert ist, dass sie die Position des beweglichen Blocks (300) entsprechend der Bewegungsrichtung des beweglichen Blocks (300) und der Anzahl an Malen, die Licht von dem lichtempfangenden Sensor (822) empfangen wird, erfasst.

2. Vorrichtung (1000) nach Anspruch 1, weiterhin umfassend:
eine Energieversorgungsleitung (210), die an einer ersten Oberfläche der Schiene (200) entlang einer Längsrichtung der Schiene (200) montiert ist und der von außen Antriebsenergie zugeführt wird; und
einen Energieversorgungsanschluss (380), der an einer ersten Seite des beweglichen Blocks (300) so montiert ist, dass der Energieversorgungsanschluss (380) mit der Energieversorgungsleitung (210) in Kontakt steht, wobei der Energieversorgungsanschluss (380) mit dem Motor (310) und der Kameraeinheit (610) elektrisch verbunden ist und der Energieversorgungsanschluss (380) so konfiguriert ist, dass er die von außen zugeführte Antriebsenergie dem Motor (310) und der Kameraeinheit (610) zuführt.

3. Vorrichtung (1000) nach Anspruch 2, wobei der
Energieversorgungsanschluss (380) mit einem Teil (381) zur Aufrechterhaltung eines engen Kontakts versehen ist, das konvex in Richtung der Energieversorgungsleitung (210) so vorsteht, dass der Energieversorgungsanschluss (380) stets in engem Kontakt mit der Energieversorgungsleitung (210) steht.

4. Vorrichtung (1000) nach Anspruch 1, wobei der bewegliche Block (300) umfasst:
eine vertikale Platte (320), an der der Motor (310) an einer ersten Oberfläche der vertikalen Platte (320) montiert ist;
eine obere horizontale Platte (330), die horizontal an einem oberen Ende der vertikalen Platte (320) montiert ist;
eine untere horizontale Platte (340), die horizontal an einem unteren Ende der vertikalen Platte (320) montiert ist;
eine Hauptrolle (350), die mit einer Drehwelle des Motors (310) verbunden ist und mit einer ersten Oberfläche der Schiene (200) in Kontakt steht;
eine obere Führungsrolle (360), die jeweilige obere Führungsrollen umfasst, die an einer Vorderseite und einer Rückseite eines oberen Abschnitts einer inneren Oberfläche der vertikalen Platte (320) so montiert sind, dass die jeweiligen oberen Führungsrollen gedreht werden können, wobei die obere Führungsrolle (360) so konfiguriert ist, dass sie eine Drehbewegung ausführt, indem sie in engem Kontakt mit einer oberen Oberfläche der Schiene (200) steht; und
eine untere Führungsrolle (370), die jeweilige Führungsrollen umfasst, die an einer Vorderseite und einer Rückseite einer inneren Oberfläche der unteren horizontalen Platte (340) so montiert sind, dass die jeweiligen unteren Führungsrollen gedreht werden können, wobei die untere Führungsrolle (370) mit einer zweiten Oberfläche der Schiene (200) in Kontakt steht.

5. Vorrichtung (1000) nach Anspruch 4,
wobei ein Endabschnitt der unteren horizontalen Platte (340) mit einem Führungsteil (341) versehen ist, das vertikal nach oben gebogen ist, und wobei der lichtemittierende Sensor (821) an einer Innenseite der vertikalen Platte (320) in einer Höhe montiert ist, die dem Positionsprüfungsloch (810) entspricht, und der lichtempfangende Sensor (822) an dem Führungsteil (341) montiert ist, das vertikal in Richtung der Oberseite des Endabschnitts der unteren horizontalen Platte (340) so gebogen ist, dass der lichtempfangende Sensor (822) dem lichtemittierenden Sensor (821) zugewandt ist.

6. Vorrichtung (1000) nach Anspruch 1, weiterhin umfassend:
eine Mehrzahl von Befestigungshalterungen (100), deren obere Abschnitte vertikal an der Decke des Tunnels entlang der Längsrichtung des Tunnels montiert sind,
wobei die Schiene (200) mit der Befestigungshalterung (100) verbunden ist und so montiert ist, dass die Schiene (200) von der Decke des Tunnels beabstandet ist.

## Revendications

1. Dispositif (1000) de photographie de surface de paroi de tunnel, ledit dispositif (1000) comprenant :
un rail (200) monté au plafond d'un tunnel dans la direction longitudinale du tunnel ;
un bloc mobile (300) accouplé au rail (200) et prévu pour être déplacé le long du rail (200) en fonction de l'entraînement d'un moteur (310) pourvu d'un codeur ;
un support de connexion (400) raccordé à une partie inférieure du bloc mobile (300) ;
un support de caméra (500) fixé au support de connexion (400), ledit support de caméra (500) ayant une surface avant opposée à une première extrémité du rail (200), une surface arrière opposée à une deuxième extrémité du rail (200), et une surface circonférentielle extérieure parallèle au rail (200) ;
une unité de caméra (610) comprenant une pluralité de caméras latérales (612), disposées sur la surface circonférentielle extérieure du support de caméra (500) avec des intervalles entre elles, et prévues pour photographier la surface de paroi de tunnel ;
une unité de commande montée à l'intérieur du support de caméra (500) et prévue pour commander l'entraînement du moteur (310) ; et
un mécanisme de détection de position permettant à l'unité de commande de détecter la position du bloc mobile (300) à l'intérieur du tunnel,
**caractérisé en ce que**
le mécanisme de détection de position comprend :
une pluralité de trous de contrôle de position (810) ménagés dans le rail (200) dans la direction longitudinale du rail (200) à intervalles prédéterminés ;
un capteur électroluminescent (821) monté sur un premier côté du bloc mobile (300) ; et
un capteur de réception de lumière (822) monté sur un deuxième côté du bloc mobile (300) de sorte que le capteur de réception de lumière (822) est opposé au capteur électroluminescent (821), ledit capteur de réception de lumière (822) étant prévu pour recevoir la lumière émise par le capteur électroluminescent (821) et passant par le trou de contrôle de position (810), et
l'unité de commande étant prévue pour détecter la position du bloc mobile (300) en fonction de la direction de déplacement du bloc mobile (300) et du nombre de fois où la lumière est reçue par le capteur de réception de lumière (822)

2. Dispositif (1000) selon la revendication 1, comprenant en outre :
une ligne d'alimentation électrique (210) montée sur une première surface du rail (200) dans la direction longitudinale du rail (200) et à laquelle une énergie motrice provenant de l'extérieur est fournie ; et
une borne d'alimentation électrique (380) montée sur un premier côté du bloc mobile (300) de sorte que ladite borne d'alimentation électrique (380) est en contact avec la ligne d'alimentation électrique (210), ladite borne d'alimentation électrique (380) étant électriquement connectée au moteur (310) et à l'unité de caméra (610), et ladite borne d'alimentation électrique (380) étant prévue pour fournir l'énergie d'entraînement provenant de l'extérieur au moteur (310) et à l'unité de caméra (610).

3. Dispositif (1000) selon la revendication 2, où la borne d'alimentation électrique (380) est pourvue d'une partie de maintien en contact étroit (381) faisant saillie de manière convexe vers la ligne d'alimentation électrique (210), de sorte que la borne d'alimentation électrique (380) est constamment en contact étroit avec la ligne d'alimentation électrique (210).

4. Dispositif (1000) selon la revendication 1, où le bloc mobile (300) comprend :
une plaque verticale (320) sur laquelle le moteur (310) est monté, sur une première surface de ladite plaque verticale (320) ;
une plaque horizontale supérieure (330) montée horizontalement à une extrémité supérieure de la plaque verticale (320) ;
une plaque horizontale inférieure (340) montée horizontalement à une extrémité inférieure de la plaque verticale (320) ;
un galet principal (350) raccordé à un arbre rotatif du moteur (310) et en contact avec une première surface du rail (200) ;
un galet de guidage supérieur (360) comprenant des galets de guidage supérieurs respectifs montés sur un côté avant et un côté arrière d'une partie supérieure d'une surface intérieure de la plaque verticale (320), de sorte que lesdits galets de guidage supérieurs respectifs peuvent être entraînés en rotation, ledit galet de guidage supérieur (360) étant prévu pour effectuer un mouvement de rotation en étant en contact étroit avec une surface supérieure du rail (200) ; et
un galet de guidage inférieur (370) comprenant des galets de guidage inférieurs respectifs montés sur un côté avant et un côté arrière d'une surface intérieure de la plaque horizontale inférieure (340), de sorte que lesdits galets de guidage inférieurs respectifs peuvent être entraînés en rotation, ledit galet de guidage inférieur (370) étant en contact avec une deuxième surface du rail (200).

5. Dispositif (1000) selon la revendication 4,
où une partie d'extrémité de la plaque horizontale inférieure (340) est pourvue d'une partie de guidage (341) pliée verticalement vers le haut, et
où le capteur électroluminescent (821) est monté sur un côté intérieur de la plaque verticale (320) à une hauteur correspondant au trou de contrôle de position (810), et le capteur de réception de lumière (822) est monté sur la partie de guidage (341) pliée verticalement vers le côté supérieur de la partie d'extrémité de la plaque horizontale inférieure (340), de sorte que le capteur de réception de lumière (822) est opposé au capteur électroluminescent (821).

6. Dispositif (1000) selon la revendication 1, comprenant en outre :
une pluralité de supports de fixation (100) ayant des parties supérieures montées verticalement sur le plafond du tunnel dans la direction longitudinale du tunnel,
où le rail (200) est raccordé au support de fixation (100), et est monté de sorte que ledit rail (200) est espacé du plafond du tunnel.
